# EUROPEAN PATENT SPECIFICATION

(11) **EP 2 751 650 B1**
(45) Date of publication and mention of the grant of the patent: **15.11.2017**
(21) Application number: 11871411.2
(22) Date of filing: 31.08.2011
(51) Int. Cl.: G06F 3/0488, B60K 35/00, G01C 21/36, G06F 3/0481

(54) **INTERACTIVE SYSTEM FOR VEHICLE**
INTERAKTIVES SYSTEM FÜR EIN FAHRZEUG
SYSTÈME INTERACTIF POUR VÉHICULE

(43) Date of publication of application: 09.07.2014
(73) Proprietor: Qoros Automotive Co., Ltd., Jiangsu 215512 (CN)
(72) Inventor: BOELTER, Markus Andreas, Changshu Jiangsu 215512 (CN); YUN, Zi, Changshu Jiangsu 215512 (CN); LIU, Yilin, Changshu Jiangsu 215512 (CN); KUO, Linying, Changshu Jiangsu 215512 (CN); ZHANG, Leizhong, Changshu Jiangsu 215512 (CN)
(74) Representative: Goddar, Heinz J.
(86) International application number: PCT/CN2011/079210
(87) International publication number: WO 2013/029256

(56) References cited:
- CN-A- 101 315 593
- CN-A- 101 672 648
- CN-A- 101 943 983
- US-A1- 2004 122 572
- US-A1- 2005 248 542
- US-A1- 2008 016 443
- US-A1- 2009 085 886
- US-A1- 2011 145 705
- US-B1- 7 030 861

## Description

### FIELD OF THE INVENTION

The present invention relates to a vehicle's interactive system, particularly, a vehicle's interactive system that distinguishes between different types of finger gestures of a user.

### BACKGROUND OF THE INVENTION

Many vehicles are nowadays provided with a large number of applications. For example, passenger cars are often provided with radio, MP3 player, TV, navigation system, telephone etc. In order to facilitate control, a single interface device may be present in the vehicle by which different applications may be controlled. For example, the control of a radio and the setting of the car's air conditioning may be controlled via the same interface device.

Such interface devices may use different types of actuators such as hard keys, buttons, joy-sticks, etc. for user input. Interface devices relying on such actuators often suffer from the drawback that the actuators are associated with different functions and operation is thus complicated and needs full attention by the user. The user, however, is usually driving the car and may not be able to focus on operation of the interface device.

To simplify operation, in WO 2010/142543 A1, an interface device with a touch screen is disclosed. On the touch screen, a menu including several objects is shown, the objects being associated with global input gestures. Independently from the content currently visible on the touch screen, a function is executed when a corresponding one of the global input gestures is detected. The global input gestures may comprise a user writing a number on the touch screen with his finger. The device then executes a function of the menu corresponding to that number.

However, the user still needs to capture the currently shown menu while driving, find the desired function, determine the number that the desired function corresponds to and then make a complicated handwriting gesture on the touch screen.

US 2008/016443 A1 discloses a navigation device and a simple/detailed information display method. The navigation device includes a display monitor equipped with a touch panel. As a touch position moves from the edge into the display area, an audio information screen takes up substantially entry of display screen which previously has shown a road map.

US 7 030 861 B1 discloses a system and method for packing multi-touch gestures onto a hand. A multi-touch system compares finger arrangement at the beginning of multi-touch gestures and discriminates between neutral- and spread-hand performance.

### SUMMARY OF THE INVENTION

The present invention seeks to provide a way of navigating to applications of a vehicle that is intuitive, quick and easy and minimizes distraction for the driver. Further, multiple touch control enables differentiation of a local control (e.g., point touch) and global control (e.g., single swipe), thus enabling switch display or operation from on application to another application.

To solve the above problem, a method according to claim 1, a computer-readable medium according to claim 9 and an interactive system according to claim 10 are provided.

In particular, a method for allowing a user to control applications of a vehicle via an interactive system with a touch-sensitive screen having an input area is provided. The method comprises:
displaying a first representation of a first application in a first edge region of the touch-sensitive screen;
displaying a second representation of a second application in a main area of the touch-sensitive screen; and
replacing display of the second representation of the second application in the main area with a display of the first representation of the first application when a first type of finger gesture is detected,
wherein the first type of finger gesture includes a finger movement along one or more lines toward the first edge region.

Here, representations displayed in edge regions of the screen are dedicated to specific applications. By a simple swipe towards one of the representations, the user can cause the system to open the corresponding application in the main area. Further, as the representations are displayed at the edge regions, the user easily sees where his gesture should be directed and may quickly call the application by swiping his fingers towards said representation without having to navigate through any menus. The representations may be located directly at the edges of the display. As a user can feel the edge of the screen, it is possible for the user to perform the application change "blindly" without looking at the screen. In some embodiments, two or more representations of applications may be displayed in the same edge region. In some embodiments, one or more representations are displayed at a straight edge section of the display. Moreover, the main area may be identical to or lie entirely within the input area of the screen.

In some embodiments, the method further comprises starting the first application when the first type of finger gesture is detected. This is useful, in particular, if the first application is not already running in the background.

According to a preferred embodiment, displaying a representation of an application in an edge region of the touch-sensitive screen comprises displaying a bar, a circle or other geometric shape, preferably extending along said edge region or an edge of the screen, and/or a tag in said edge region. The bar or tag provides the user with a clear indication of the direction into which the first type of finger gesture should follow in order to cause display of a representation of the desired application. The tag may, in particular, comprise a short-cut name and/or a symbol of the associated application. This helps the user to identify which application can be called by a gesture performed in that direction. The representation displayed in the edge region may have a different color than a portion of the main area surrounding the representation.

The finger movement may comprise a movement on the screen. The first type of finger gesture may comprise a contact between a finger of the user and the touch-sensitive screen at a contact position and moving said contact position along a line by moving the finger. The line starts at a contact position at which the finger first touches the screen and ends at a position at which the finger ceases to touch the screen, while there is an uninterrupted or substantially uninterrupted contact between the finger and the screen along the line.

In a preferred embodiment, the first type of finger gesture is detected only if the finger movement is in the main area. By restricting the finger movement to the main area, the edge regions may still be used for other gestures, e.g. to control applications represented in that regions. It is even more preferred that the first type of finger gesture is detected only if the finger movement results in a contact line with the screen that is entirely in the main area. This avoids misinterpretation of the user input if the gesture extends over, both, the main area and an edge region.

In a preferred embodiment, the finger movement includes moving at least two fingers substantially along lines toward the first edge region and the finger movement is performed in the main area. Providing for the use of a two-finger gesture is preferred as single-finger gestures may still be used to call functions associated with objects shown in the main area. Moreover, in this embodiment, the main area is used, both, for displaying the representation of one of the applications and for inputting finger gestures.

In some embodiments, said moving at least two fingers is detected if contact positions of the fingers with the screen have a minimum spacing of about 10 mm, in particular, about 15 mm and, preferably, about 20 mm.

According to a preferred embodiment, the first type of finger gesture is detected when a speed and/or a distance of the finger movement meet predetermined values. This avoids undesired displaying of applications due to the user's finger involuntarily contacting the screen when the vehicle is moving. Requiring a predetermined distance further avoids false interpretation of short finger gestures by which the user might otherwise wish to actuate functions associated with the main area. According to a preferred embodiment, the first type of finger gesture is detected only if the gesture results in a contact line on the screen that is between 2 mm and 100 mm, in particular, between 3 mm and 60 mm and, preferably between 5 mm and 50 mm in length. Such a length allows to clearly distinguish between a swiping gesture and a static, point-like gesture. This is especially advantageous if the system also provides for static gestures to be used, e.g. to call functions associated with objects in the main area, as set forth below.

In some embodiments, the first type of finger gesture is detected only when the finger movement results in a line that has a length of at least 5%, in particular at least about 10% and preferably at least 20% of a smallest dimension or a diameter of the screen. In a preferred embodiment, the first type of finger gesture is detected when fingers have moved in a predetermined direction on the screen.

In some embodiments, the second application is replaced only if said gesture results in a straight contact line on the screen. In contrast to gestures resulting in contact lines on the screen that have curves or corners, for a substantially straight contact line, its direction can be easily determined. Here, the term substantially straight may comprise a radius of curvature of more than about 20 mm, in particular more than about 50 mm and, preferably more than about 100 mm. Alternatively or additionally, the term substantially straight may comprise a ratio of a radius of curvature of a contact line to a length of the contact line of more than one, in particular, more than three and, preferably more than ten.

According to a preferred embodiment, at least one of the first and second applications is a navigation application, an entertainment application, a communication application or a car-information application. Displaying the application in the main area may comprise displaying at least one object associated with said application in the main area. The at least one object may, e.g. be an object associated with a function of the application, a pictogram, a button and/or an object presenting information associated with the application.

In accordance with the invention, the method further comprises, when displaying the first and/or second representation in the main area:
displaying, in the main area, at least one object in an object area associated with a function of the respective application displayed in the main area and the method further comprises:
   executing the function associated with the object when a second type of finger gesture different from the first type of finger gesture is detected.

This embodiment further allows for functions to be called by the user via the main area. The object shown in the main area may e.g. comprise a symbol or a name of the function. In accordance with the invention, the second type of finger gesture is a one-finger movement, e.g. a one-finger swipe or a one-finger static gesture. A static gesture is a gesture that results in an essentially non-moving contact position on the screen.

It is even more preferred that said executing comprises transmitting, via a bus connector of the interactive system, a trigger signal to an execution unit associated with said function. In this embodiment, the execution unit may be external to the interactive system. The interactive system may thus be replaced without having to replace the execution units as well. Further, communication via a communication bus is preferred for better compatibility with a variety of execution units. Alternatively, one or more execution units may be integral to the interactive system as set forth below.

In some embodiments, each application may be associated with a different execution unit. The interactive system may be connected, via said communication connection, to a plurality of execution units. Each execution unit may be adapted to execute functions associated with a respective one of said applications. The execution units may comprise e.g. an entertainment unit, a communication unit, a navigation unit and/or a car information unit. The entertainment unit may further comprise a radio, a CD player and/or a MP3 player. The car information unit may e.g. comprise a climate control unit.

According to a preferred embodiment, the method further comprises:
displaying at least one, preferably three additional representations of respective applications in respective edge regions of the touch-sensitive screen, and
replacing display of the second representation of the second application in the main area with a display of one of the additional representations when a first type of finger gesture toward a respective one of the edge regions is detected on the screen.

Here, various applications may be opened by the user by swiping his fingers into a corresponding direction on the screen. Hence, the user is provided with the possibility to control a variety of applications by simple gestures. The representations may, in particular, be associated with different applications. Alternatively, two or more of the representations may be associated with the same application.

According to a preferred embodiment, the method further comprises sending an acoustic notification when the first type of finger gesture toward the first edge region is detected. In this embodiment, the user is acoustically informed that the application is replaced in the main area. This step may comprise sending a different acoustic notification based on the application now displayed in the main area. For example, a beep of different frequency may be produced for different applications now displayed in the main menu. The user is thus informed of which application is displayed without having to look at the screen.

In a further aspect, the present invention provides a computer-readable medium containing instructions that when executed by an interactive system of a vehicle with a touch-sensitive screen cause the interactive system to perform a method of the aforementioned kind.

In a still further aspect, an interactive system for controlling vehicle applications adapted to display a plurality of applications in a main area and at least two edge regions of the touch-sensitive screen and actuate functions of the applications by a user input is provided, comprising a touch-sensitive screen configured to differentiate between a first type of finger gesture and a second type of finger gesture and replace a display of a representation of a second application in the main area of the touch-sensitive screen with display of a representation of a first application previously displayed in a first edge region when the first type of finger gesture is detected, wherein the first type of finger gesture includes a finger movement along lines toward the first edge region, and wherein the main area extends over an entire area of the screen not covered by the edge region.

In particular, the main area may extend over an entire area of the screen not covered by the at least two edge regions. In a preferred embodiment, a substantially entire main area of the touch-sensitive screen is responsive to the first type of finger gesture. Hence, a user is capable of performing the first type of gesture without a need of visual observation of the touch-sensitive screen while accomplishing a desired control correctly.

In accordance with the invention, the first type of finger gesture is detected when two fingers have moved a predetermined distance on the touch-sensitive screen toward a direction of the first edge region.

According to the invention, the touch-sensitive screen is further configured to actuate a selected function of an application when a second type of finger gesture is detected, wherein the second type of finger gesture is different from the first type of finger gesture.

In a preferred embodiment, the second type of finger gesture is a one-finger static contact with the touch-sensitive screen or a one-finger swipe over a distance in the touch-sensitive screen.

The interactive system is adapted to control applications of the vehicle. In particular, the interface device may have a bus connector for connecting to a communication bus of the vehicle.

The invention further provides an interactive system for controlling vehicle applications with a touch-sensitive screen adapted to perform a method of the aforementioned kind.

In an embodiment, the touch-sensitive screen comprises an LCD, an LED, in particular an OLED, and/or a multi-color display unit. Such display units are easy to manufacture, reliable and consume little energy. This is especially advantageous in the context of using the interface unit in a vehicle.

In a preferred embodiment, the interactive system further has means for fixedly installing said system to said vehicle, in particular, into a dashboard of said vehicle. This allows for a steady position of the interactive system relative to the driver, such that he can easily locate the screen. The means for fixedly installing may, e.g. comprise a threading, one or more screw holes and/or one or more clamps.

In a further aspect, the present invention provides a motor vehicle, in particular, a passenger car, a truck, a motor boat or a plane comprising an interactive system of the aforementioned kind.

### SHORT DESCRIPTION OF DRAWINGS

The present invention is now illustrated by means of the following description of a preferred embodiment, wherein:
- Fig. 1: shows a schematic block diagram of an embodiment of an interactive system according to the present invention,
- Fig. 2: shows a display of the screen of the interactive system according to the present invention with a first screen configuration,
- Fig. 3: shows a display of the screen of the interactive system according to the present invention with a second screen configuration,
- Fig. 4: shows a display of the screen of the interactive system according to the present invention with a third screen configuration,
- Fig. 5: shows an interactive system according to the invention.

### DETAILED DESCRIPTION OF EMBODIMENT

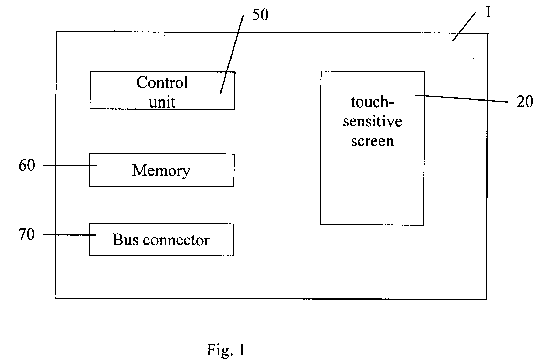

Fig. 1 shows a schematic block diagram of an embodiment of an interactive system according to the present invention. The system 1 comprises a touch-sensitive screen 20, a control unit 50, a memory 60 and a bus connector 70. The control unit 50 is connected to the memory 60 and is further adapted to execute a program stored in the memory 60. Further, the control unit 50 is connected to the screen 20. The control unit 50 controls a display of the screen 20 and is further adapted to receive input from a user via the screen 20. In addition, the control unit 50 is connected to the bus connector 70 by which the system 1 may be connected to a vehicle bus.

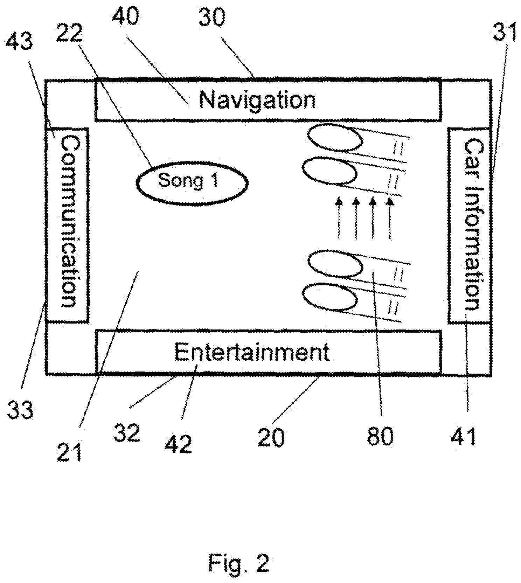

Figs. 2-4 show a display of the screen of the interactive system 1 according to the present invention with different applications displayed in a main area 21 of the screen. The display of the rectangular touch-sensitive screen 20 has a main area 21. Only one representation of an application at a time is displayed in the main area 21. In Fig. 2, a representation of an entertainment application is displayed in the main area 21, comprising an object 22 associated with a song in an MP3 play list. If the user touches the object 22 with his finger in a static manner, the interactive system 1 executes playing of the respective song. At each edge 30-33 of the screen 20, a respective representation 40-43 of a respective application is displayed. Each representation 40-43 comprises a bar containing a tag associated with the respective application. In more detail, in the upper edge region, a representation 40 of a navigation application is displayed; in the right edge region, a representation 41 of a car information application is displayed; in the lower edge region, a representation 42 of an entertainment application is displayed; and in the left edge region a representation 43 of a communication application is displayed.

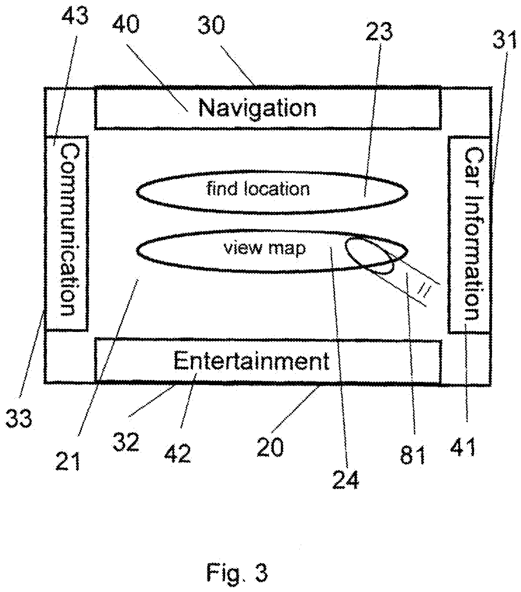

Upon detecting a multiple gesture, the system may cause a change of the display in the main area 21 from the representation of one application to the representation of another application. The multiple finger gestures may include two-finger touch, three-finger touch, four-finger or five-finger touch on the touch-sensitive screen in a predetermined pattern recognizable by the interactive system. In one example, the predetermined pattern may be finger touch pattern that are easily performed by a user. For example, a two-finger gesture may include a two-finger swipe to different directions. In particular, a two-finger swipe upward as indicated by reference number 80 in Fig. 2 may switch the main area 21 to a display of a representation of the navigation application. Similarly, a two-finger swipe downward may switch to the display of a representation of the entertainment application, a two-finger swipe to the left may switch to the display of a representation of the communication application, and a two-finger swipe to the right may switch to the display of a representation of the car information application. That is, the main area 21 of the screen 20 supports multiple gesture control. Single-finger gestures in the main area 21 may cause execution of a function within an application, while a two-finger gesture may cause switching between different applications being displayed in the main area 21. In one example, the two-finger movement illustrated in Fig. 2 may cause the display of navigation application in the main area to replace the previously displayed entertainment application as shown in Fig. 3.

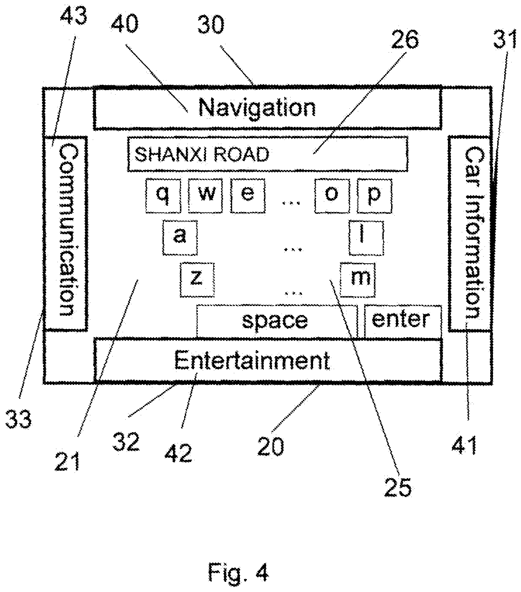

In Fig. 3, the main area 21 of the screen 20 is displaying a representation of the navigation application. Selecting "find location" 22 shown in the main area 21 by a one-figure gesture may actuate a display of a key board 25 in the main area 21 (see Fig. 4) to allow an entry of a destination in a location field 26 displayed in the main area 21 to get a direction. Further, selecting "view map" 24 in the main area 24 as indicated by finger 81 causes the system 1 to display a map in the main area 21. Similarly, a user can select a different menu level or execute a function in the entertainment application, communication application, car information application and other application of the interactive system if one of such applications is displayed in the main area 21.

A two-finger gesture on the main area 21 may, regardless of the application being currently displayed in the main area 21, cause replacing the representation of the application in the main area 21 with a representation of a different application.

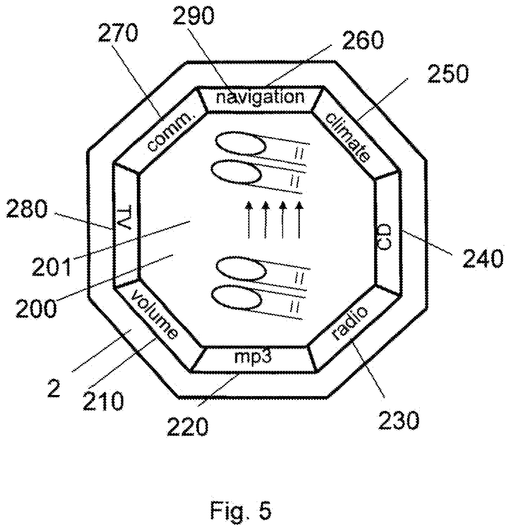

Fig. 5 shows an embodiment of the interactive system. The interactive system 2 comprises a touch-sensitive screen 200 which is octagonal. Screen 200 has a main area 201. At each edge 210-280 of the screen 200, a representation of a respective different application is displayed, of which in Fig. 5 only one representation is exemplarily referenced by reference number 290. By a two-finger sweeping gesture towards one of the edge regions, the respective application is displayed in the main area 201. The interactive system 2 is adapted to distinguish between two-finger sweeping gestures directed towards the eight edge regions. As described in more detail with regard to the embodiment of Figs. 2-4, the main area 201 may show a number of objects in corresponding object areas. The user may call functions of the application displayed in the main area 201 by a one-finger gesture on one of said objects.

Further modifications of the described embodiments are possible without leaving the scope of the present invention which is defined by the enclosed claims. For example, the representation displayed in the edge regions may comprise a current status of the corresponding application. In some embodiments, in one edge region, two edge regions or three edge regions representations of applications are displayed while the rest of the edge regions are reserved for other purposes.

## Claims

1. A method for allowing a user to control applications of a vehicle via an interactive system (1; 2) with a touch-sensitive screen (20; 200) having an input area, the method comprising:
displaying a first representation (40-43; 29) of a first application in a first edge region of the touch-sensitive screen (20; 200);
displaying a second representation (40-43; 29) of a second application in a main area (21; 201) of the touch-sensitive screen (20; 200); and
replacing display of the second representation (40-43; 29) of the second application in the main area (21; 201) with a display of the first representation (40-43; 29) of the first application when a first type of finger gesture is detected, **characterized in that** the first type of finger gesture is detected when fingers have moved in a predetermined direction on the screen; wherein displaying the first and/or second representation in the main area comprises:
displaying, on the main area (21; 201), at least one object (22-26) in an object area associated with a function of the respective application displayed in the main area (21; 201) and the method further comprising:
executing the function associated with the object (22-26) when a second type of finger gesture different from the first type of finger gesture is detected,
wherein the second type of finger gesture is a one-finger movement.

2. The method of claim 1, wherein the first type of finger gesture is detected only if the finger movement is in the main area (21; 201), and/or
only when the finger movement results in a contact line on the screen (20; 200) that has a length of at least 5%, of a smallest dimension of the screen, and/or
only if it results in a straight contact line on the screen (20; 200).

3. The method of claim 1 or 2, wherein the finger movement includes moving at least two fingers substantially along lines toward the first edge region and the finger movement is performed in the main area (21; 201).

4. The method of claim 1 or 2, wherein the finger movement includes moving multiple fingers in a predetermined pattern in the main area (21; 201).

5. The method of any of the preceding claims, wherein the first type of finger gesture is detected when a speed and/or distance of the finger movement meet predetermined values, and/or
when fingers have moved in a predetermined direction on the screen (20; 200) for a pre-determined distance.

6. The method of claim 1, wherein said executing comprises transmitting, via a bus connector (70) of the interactive system, a trigger signal to an execution unit associated with said function.

7. The method of any of the preceding claims, further comprising:
displaying at least one or three additional representations (40-43; 29) of respective applications in respective edge regions of the touch-sensitive screen (20; 200), and
replacing display of the second representation of the second application in the main area (21; 201) with a display of one of the additional representations (40-43; 29) when a first type of finger gesture toward a respective one of the edge regions is detected on the screen (20; 200).

8. The method of any of the preceding claims, further comprising: sending an acoustic notification when the first type of finger gesture toward the first edge region is detected.

9. A computer-readable medium containing instructions that when executed by an interactive system (1; 2) of a vehicle with a touch-sensitive screen (20; 200) cause the interactive system (1; 2) to perform the method of any of claims 1 to 7.

10. An interactive system (1; 2) for controlling vehicle applications adapted to display a plurality of applications in a main area (21; 201) and at least two edge regions of the touch-sensitive screen (20; 200) and actuate functions of the applications by a user input, comprising:
a touch-sensitive screen (20; 200) configured to differentiate between a first type of finger gesture and a second type of finger gesture and replace a display of a representation (40-43; 29) of a second application in the main area (21; 201) of the touch-sensitive screen (20; 200) with display of a representation (40-43; 29) of a first application previously displayed in a first edge region when the first type of finger gesture is detected, wherein the first type of finger gesture includes a finger movement along lines toward the first edge region, and the main area (21; 201) extends over an entire area of the screen (20; 200) not covered by the edge region, **characterized in that** the first type of finger gesture is detected when two fingers have moved a predetermined distance on the touch-sensitive screen (20; 200) toward a direction of the first edge region,
wherein the touch-sensitive screen (20; 200) further configured to actuate a selected function of an application when a second type of finger gesture is detected, wherein the second type of finger gesture is a one-finger static contact with the touch-sensitive screen (20; 200) or a one-finger swipe over a distance in the touch-sensitive screen (20; 200).

## Patentansprüche

1. Verfahren zum Ermöglichen eines Benutzers, Anwendungen eines Fahrzeugs über ein interaktives System (1; 2) mit einem berührungsempfindlichen Bildschirm (20; 200) mit einem Eingabebereich zu steuern, wobei das Verfahren Folgendes umfasst:
Anzeigen einer ersten Darstellung (40-43; 29) einer ersten Anwendung in einem ersten Randbereich des berührungsempfindlichen Bildschirms (20; 200);
Anzeigen einer zweiten Darstellung (40-43; 29) einer zweiten Anwendung in einem Hauptbereich (21; 201) des berührungsempfindlichen Bildschirms (20; 200); und
Ersetzen der Anzeige der zweiten Darstellung (40-43; 29) der zweiten Anwendung in dem Hauptbereich (21; 201) mit einer Anzeige der ersten Darstellung (40-43; 29) der ersten Anwendung, wenn eine erste Art einer Fingergeste detektiert wird, **dadurch gekennzeichnet, dass** die erste Art der Fingergeste detektiert wird, wenn sich Finger in einer vorbestimmten Richtung auf den Bildschirm bewegt haben; wobei das Anzeigen der ersten und/oder zweiten Darstellung in dem Hauptbereich Folgendes umfasst:
Anzeigen auf dem Hauptbereich (21; 201) eines ersten Objekts (22-26) in einem Objektbereich, welches mit einer Funktion der jeweiligen Anwendung, die in dem Hauptbereich (21; 201) dargestellt ist, verknüpft ist, und das Verfahren ferner Folgendes umfasst:
Ausführen der Funktion, die mit dem Objekt (22-26) verknüpft ist, wenn eine zweite Art von Fingergeste, die sich von der ersten Art von Fingergeste unterscheidet, detektiert wird,
wobei die zweite Art von Fingergeste eine Bewegung eines Fingers ist.

2. Verfahren nach Anspruch 1, wobei die erste Art von Fingergeste nur detektiert wird, wenn die Fingerbewegung in dem Hauptbereich (21; 201) ist, und/oder nur wenn die Fingerbewegung zu einer Berührungslinie auf dem Bildschirm (20; 200) führt, die eine Länge von wenigstens 5% einer kleinsten Abmessung des Bildschirms ist und/oder nur wenn sie zu einer geraden Berührungslinie auf dem Bildschirm (20; 200) führt.

3. Verfahren nach Anspruch 1 oder 2, wobei die Fingerbewegung ein Bewegen von wenigstens zwei Fingern im Wesentlichen entlang von Linien in Richtung zu dem ersten Randbereich aufweist und die Fingerbewegung in dem Hauptbereich (21; 201) ausgeführt wird.

4. Verfahren nach Anspruch 1 order 2, wobei die Fingerbewegung ein Bewegen mehrerer Finger in einem vorbestimmten Muster in dem Hauptbereich (21; 201) aufweist.

5. Verfahren nach einem der vorhergehenden Ansprüche, wobei die erste Art von Fingergeste detektiert wird, wenn eine Geschwindigkeit und/oder eine Entfernung der Fingerbewegung vorgegebenen Werten entspricht,
und/oder wenn sich Finger in einer vorbestimmten Richtung auf dem Bildschirm (20; 200) über einen vorbestimmten Abstand bewegt haben.

6. Verfahren nach Anspruch 1, wobei das Ausführen ein Übertragen eines Auslösesignals an eine Auslöseeinheit, die mit der Funktion verknüpft ist, über eine Busverbindung (70) des interaktiven Systems umfasst.

7. Verfahren nach einem der vorhergehenden Ansprüche, das ferner Folgendes umfasst:
Anzeigen von wenigstens einer oder drei zusätzlichen Darstellungen (40-43; 29) jeweiliger Anwendungen in jeweiligen Randbereichen des berührungsempfindlichen Bildschirms (20; 200), und
Ersetzen der Anzeige der zweiten Darstellung der zweiten Anwendung in dem Hauptbereich (21; 201) mit einer Anzeige von einer oder mehreren zusätzlichen Darstellungen (40-43; 29), wenn eine erste Art von Fingergeste in Richtung eines jeweiligen Randbereiches auf dem Bildschirm (20; 200) detektiert wird.

8. Verfahren nach einem der vorhergehenden Ansprüche, das ferner Folgendes umfasst: Senden einer akustischen Benachrichtigung, wenn die erste Art von Fingergeste in Richtung zum ersten Randbereich detektiert wird.

9. Computerlesbares Medium, welches Anweisungen enthält, die, wenn sie auf einem interaktiven System (1; 2) eines Fahrzeuges mit einem berührungsempfindlichen Bildschirm (20; 200) ausgeführt werden, in dem interaktiven System (1; 2) bewirken, dass das Verfahren nach einem der Ansprüche 1 bis 7 ausgeführt wird.

10. Interaktives System (1; 2) zum Steuern von Fahrzeuganwendungen, die dafür eingerichtet sind, mehrere Anwendungen in einem Hauptbereich (21; 201) und wenigstens zwei Randbereichen des berührungsempfindlichen Bildschirms (20; 200) anzuzeigen und Funktionen der Anwendungen durch eine Benutzerausgabe auszuführen, das Folgendes umfasst:
einen berührungsempfindlichen Bildschirm (20; 200), der so konfiguriert ist, das er zwischen einer ersten Art von Fingergeste und einer zweiten Art von Fingergeste unterscheidet und die Anzeige einer Darstellung (40-43; 29) der zweiten Anwendung in dem Hauptbereich (21; 201) des berührungsempfindlichen Bildschirms (20; 200) mit einer Anzeige einer Darstellung (40-43; 29) einer ersten Anwendung, die vorhergehend in einem Randbereich angezeigt wurde, ersetzt, wenn die erste Art von Fingergeste detektiert wird, wobei die erste Art von Fingergeste eine Fingerbewegung entlang von Linien in Richtung zu dem ersten Randbereich aufweist, und der Hauptbereich (21; 201) sich über einen gesamten Bereich des Bildschirms (20; 200) erstreckt, der nicht von dem ersten Randbereich abgedeckt ist, **dadurch gekennzeichnet, dass** die ersten Art von Fingergeste detektiert wird, wenn zwei Finger sich über einen vorbestimmte Entfernung auf dem berührungsempfindlichen Bildschirm (20; 200) in Richtung zu dem ersten Randbereich bewegt haben,
wobei der berührungsempfindliche Bildschirm (20; 200) ferner dafür eingerichtet ist, eine ausgewählte Funktion einer Anwendung auszuführen, wenn eine zweite Art einer Fingergeste detektiert wird, wobei die zweite Art der Fingergeste eine statische Berührung mit einem einzelnen Finger auf dem berührungsempfindlichen Bildschirm (20; 200) oder ein Wischen mit einem einzelnen Finger über eine Entfernung in dem berührungsempfindlichen Bildschirm (20; 200) ist.

## Revendications

1. Procédé pour permettre à un utilisateur de commander des applications d'un véhicule via un système interactif (1 ; 2) avec un écran tactile (20 ; 200) ayant une zone d'entrée, le procédé comprenant :
l'affichage d'une première représentation (40-43 ; 29) d'une première application dans une première région de bord de l'écran tactile (20 ; 200) ;
l'affichage d'une seconde représentation (40-43 ; 29) d'une seconde application dans une zone principale (21 ; 201) de l'écran tactile (20 ; 200) ; et
le remplacement de l'affichage de la seconde représentation (40-43 ; 29) de la seconde application dans la zone principale (21 ; 201) par un affichage de la première représentation (40-43 ; 29) de la première application lorsqu'un premier type de geste de doigt est détecté, **caractérisé en ce que**
le premier type de geste de doigt est détecté lorsque les doigts se sont déplacés dans une direction prédéterminée sur l'écran ; dans lequel l'affichage des première et/ou seconde représentations dans la zone principale comprend :
l'affichage, sur la zone principale (21 ; 201) d'au moins un objet (22-26) dans une zone d'objet associée à une fonction de l'application respective affichée dans la zone principale (21 ; 201) et le procédé comprenant en outre :
l'exécution de la fonction associée à l'objet (22-26) lorsqu'un second type de geste de doigt différent du premier type de geste de doigt est détecté,
dans lequel le second type de geste de doigt est un mouvement d'un seul doigt.

2. Procédé selon la revendication 1, dans lequel le premier type de geste de doigt est détecté uniquement si le mouvement du doigt est dans la zone principale (21 ; 201), et/ou
uniquement lorsque le mouvement du doigt donne une ligne de contact sur l'écran (20 ; 200) qui a une longueur d'au moins 5 %, d'une dimension la plus petite de l'écran, et/ou
uniquement s'il donne une ligne de contact droite sur l'écran (20 ; 200).

3. Procédé selon la revendication 1 ou 2, dans lequel le mouvement de doigt comporte le mouvement d'au moins deux doigts sensiblement le long de lignes se dirigeant vers la première région de bord et le mouvement de doigt est effectué dans la zone principale (21 ; 201).

4. Procédé selon la revendication 1 ou 2, dans lequel le mouvement de doigt comporte le mouvement de multiples doigts selon un motif prédéterminé dans la zone principale (21 ; 201).

5. Procédé selon l'une quelconque des revendications précédentes, dans lequel le premier type de geste de doigt est détecté lorsqu'une vitesse et/ou distance du mouvement de doigt correspondent à des valeurs prédéterminées, et/ou lorsque les doigts se sont déplacés dans une direction prédéterminée sur l'écran (20 ; 200) sur une distance prédéterminée.

6. Procédé selon la revendication 1, dans lequel ladite exécution comprend la transmission, via un connecteur de bus (70) du système interactif, d'un signal de déclenchement à une unité d'exécution associée à ladite fonction.

7. Procédé selon l'une quelconque des revendications précédentes, comprenant en outre :
l'affichage d'au moins une ou trois représentations supplémentaires (40-43 ; 29) des applications respectives dans des régions de bord respectives de l'écran tactile (20 ; 200), et
le remplacement de l'affichage de la seconde représentation de la seconde application dans la zone principale (21 ; 201) par un affichage de l'une quelconque des représentations supplémentaires (40-43 ; 29) lorsqu'un premier type de geste de doigt vers une région respective des régions de bord est détecté sur l'écran (20 ; 200).

8. Procédé selon l'une quelconque des revendications précédentes, comprenant en outre : l'envoi d'une notification acoustique lorsque le premier type de geste de doigt vers la première région de bord est détecté.

9. Support lisible par ordinateur contenant des instructions qui, lorsqu'elles sont exécutées par un système interactif (1 ; 2) d'un véhicule avec un écran tactile (20 ; 200) amènent le système interactif (1 ; 2) à effectuer le procédé selon l'une quelconque des revendications 1 à 7.

10. Système interactif (1 ; 2) pour commander des applications de véhicule adapté pour afficher une pluralité d'applications dans une zone principale (21 ; 201) et au moins deux régions de bord de l'écran tactile (20 ; 200) et activer des fonctions des applications grâce à une entrée utilisateur, comprenant :
un écran tactile (20 ; 200) configuré pour différentier un premier type de geste de doigt et un second type de geste de doigt et remplacer un affichage d'une représentation (40-43 ; 29) d'une seconde application dans la zone principale (21 ; 201) de l'écran tactile (20 ; 200) par l'affichage d'une représentation (40-43 ; 29) d'une première application précédemment affichée dans une première région de bord lorsque le premier type de geste de doigt est détecté, dans lequel le premier type de geste de doigt comporte un mouvement de doigt le long de lignes se dirigeant vers la première région de bord, et la zone principale (21 ; 201) s'étend sur une zone entière de l'écran (20 ; 200) non couverte par la région de bord, **caractérisé en ce que** le premier type de geste de doigt est détecté lorsque deux doigts sont déplacés sur une distance prédéterminée sur l'écran tactile (20 ; 200) vers une direction de la première région de bord,
dans lequel l'écran tactile (20 ; 200) est en outre configuré pour activer une fonction sélectionnée d'une application lorsqu'un second type de geste de doigt est détecté, dans lequel le second type de geste de doigt est un contact statique d'un doigt avec l'écran tactile (20 ; 200) ou un glissement d'un doigt sur une distance sur l'écran tactile (20 ; 200).
